(19)

Europäisches Patentamt
European Patent Office
Office européen des brevets

(11) **EP 4 174 681 A1**

(12) **EUROPEAN PATENT APPLICATION**
published in accordance with Art. 153(4) EPC

(43) Date of publication:
**03.05.2023 Bulletin 2023/18**

(21) Application number: **21832030.7**

(22) Date of filing: **11.05.2021**

(51) International Patent Classification (IPC):
**G06F 16/27** (2019.01)       **G06F 21/62** (2013.01)
**G06F 21/64** (2013.01)       **G06F 21/80** (2013.01)

(86) International application number:
**PCT/CN2021/092931**

(87) International publication number:
**WO 2022/001375 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2020 CN 202010595040**

(71) Applicants:
• **Beijing Wodong Tianjun Information Technology Co.,
Ltd.
100176 Beijing (CN)**

• **Beijing Jingdong Shangke Information Technology Co., Ltd.
Beijing 100086 (CN)**

(72) Inventors:
• **LI, Hongyu
Beijing 100176 (CN)**
• **SHEN, Zuojun
Beijing 100176 (CN)**

(74) Representative: **Müller-Boré & Partner
Patentanwälte PartG mbB
Friedenheimer Brücke 21
80639 München (DE)**

(54) **BLOCKCHAIN-BASED DATA STORAGE METHOD, SYSTEM AND APPARATUS**

(57)       Disclosed are a blockchain-based data storage method, system and apparatus, which relate to the technical field of blockchains. The specific implementation solution is: in response to receiving a matching result sent by a computing node, acquiring data to be stored of a requesting node, the matching result being obtained by performing resource balanced matching for a data storage request based on node information, and the node information being obtained by the computing node from a first blockchain; initiating a transaction according to the data to be stored of the requesting node, and generating transaction data corresponding to the data to be stored of the requesting node; perform verification on the transaction according to metadata; receiving a result indicating that the verification is passed and sent by the requesting node; and in response to the verification on the transaction is passed and receiving the result indicating that the verification is passed and sent by the requesting node, storing the transaction data into a second blockchain. Provided is a dual public blockchain based security storage solution, which improves the security of remote data storage in a blockchain network.

Fig. 1

**Description**

CROSS-REFERENCE TO RELATED APPLICATIONS

This patent application claims priority to Chinese Patent Application No. 202010595040.0 filed on June 28, 2020 by Beijing Wodong Tianjun Information Technology Co., Ltd. and Beijing Jingdong Shangke Information Technology Co., Ltd. and entitled "BLOCKCHAIN-BASED DATA STORAGE METHOD, SYSTEM AND APPARATUS", which is incorporated herein by reference.

TECHNICAL FIELD

Embodiments of this application relate to the field of computer technologies, particularly to the field of blockchain technologies, and more particularly to a blockchain-based data storage method, system and apparatus.

BACKGROUND

Blockchain is a decentralized chain-shaped data structure with the characteristics of non-tampering, scalability, and full synchronization. The blockchain transmits transaction information by means of flooding broadcast, which can ensure that all network participants have consistent view to all transaction data.

In the existing blockchain network-based solutions for remote data storage, some users who lack local storage space may store their data in blockchain nodes that is capable of providing sufficient storage space. However, due to hacker attacks, information such as physical locations of storage nodes, idle capacities of disks, and IO traffic may be leaked or tampered.

SUMMARY

This application provides a blockchain-based data storage method, system and apparatus, a device, and a storage medium.

According to a first aspect of this application, a blockchain-based data storage method is provided, the method including: in response to receiving a matching result sent by a computing node, acquiring data to be stored of a requesting node, where the matching result is obtained by performing resource balanced matching for a data storage request based on node information, and the node information is obtained by the computing node from a first blockchain; initiating a transaction according to the data to be stored of the requesting node, and generating transaction data corresponding to the data to be stored of the requesting node, where the transaction data comprises metadata corresponding to the data to be stored of the requesting node; performing verification on the transaction according to the metadata; receiving a result indicating that verification is passed and sent by the requesting node; and in response to the verification on the transaction being passed and receiving the result indicating that the verification is passed and sent by the requesting node, storing the transaction data into a second blockchain, where a construction of the second blockchain is different from a construction of the first blockchain.

In some embodiments, the matching result is generated by the computing node, and the process of generating the matching result includes: receiving a data storage request sent by any requesting node, and parsing the data storage request to obtain data to be stored of the requesting node and a storage data volume of the requesting node corresponding to the data to be stored; acquiring node information of other nodes from the first blockchain according to the storage data volume of the requesting node, where the other nodes are used to indicate network nodes which have been registered in the computing node and of which available disk capacities are not less than the storage data volume of the requesting node, and the node information comprises IP addresses of the nodes, available disk capacities of the nodes, and total disk capacities of the nodes; and performing resource matching for the data storage request by using a data balanced storage model according to the IP addresses of the nodes, the available disk capacities of the nodes, and the total disk capacities of the nodes, generating a matching result and forwarding the matching result to the requesting node and the other nodes, where the data balanced storage model is used to characterize performing variance operation on the storage data volume of the requesting node and the available disk capacities of the other nodes with the uniform distribution of disk usages of the other nodes as a desired target, and the matching result is used to characterize that the requesting node matches one and only one of the other nodes.

In some embodiments, the matching result is obtained by optimization in the data balance storage model, and the optimization process of the matching result includes: generating a bigraph corresponding to the data storage request and a set of edges in the bigraph according to the data storage request and the node information of the other nodes; determining whether a set of edges in a current bigraph satisfies an iteration stop condition, if the iteration stop condition is not satisfied, iteratively optimizing an optimal solution in a resource matching problem of a current data storage request based on a heuristic algorithm to obtain an optimized matching result of the resource matching problem of the current data storage request, deleting all edges that correspond to the optimal solution in the resource matching problem of the current data storage request in the set of edges, and jumping to the determining whether a set of edges in a current bigraph satisfies the iteration stop condition; and if the iteration stop condition is satisfied, using the matching result of the resource matching problem of the current data storage request that satisfies the iteration stop condition as the matching result obtained by optimization; where the iteration stop condition is determining whether the set of edges in the bigraph is empty, and the optimal solution is to choose a minimum value of the variance operation in each iteration.

In some embodiments, the heuristic algorithm is constructed based on a genetic algorithm or a tabu search algorithm.

In some embodiments, the method further includes: sending registration information to the computing node; and storing the node information into the first blockchain by means of initiating a transaction at intervals of a preset duration.

In some embodiments, the first blockchain and the second blockchain are both public blockchains constructed based on the Bitcoin blockchain technology or the Ethereum blockchain technology.

According to a second aspect of this application, a blockchain-based data storage system is provided, the system including: a service node, the service node being used to perform the above-mentioned blockchain-based data storage method.

In some embodiments, the system further includes a requesting node, the requesting node being used to send a data storage request to a computing node; receive a matching result sent by the computing node; perform verification on a transaction by using a consensus mechanism according to transaction data generated by the service node; and in response to the verification being passed, send to the service node a result indicating that the verification is passed.

In some embodiments, the requesting node is further used to send a query instruction to a second blockchain to obtain transaction data corresponding to the query instruction.

According to a third aspect of this application, a blockchain-based data storage apparatus is provided, the apparatus including: an acquisition unit, configured to, in response to receiving a matching result sent by a computing node, acquire data to be stored of a requesting node, where the matching result is obtained by performing resource balanced matching for a data storage request based on node information, and the node information is obtained by the computing node from a first blockchain; a transaction unit, configured to initiate a transaction according to the data to be stored of the requesting node, and generate transaction data corresponding to the data to be stored of the requesting node, where the transaction data comprises metadata corresponding to the data to be stored of the requesting node; a verification unit, configured to perform verification on the transaction according to the metadata; a receiving unit, configured to receive a result indicating that verification is passed and sent by the requesting node; and a first storage unit, configured to, in response to the verification on the transaction being passed and receiving the result indicating that the verification is passed and sent by the requesting node, store the transaction data into a second blockchain, where a construction of the second blockchain is different from a construction of the first blockchain.

In some embodiments, the matching result in the acquisition unit is generated by the computing node using the following units: a content parsing unit, configured to receive a data storage request sent by any requesting node, and parse the data storage request to obtain data to be stored of the requesting node and a storage data volume of the requesting node corresponding to the data to be stored; a node acquisition unit, configured to acquire node information of other nodes from the first blockchain according to the storage data volume of the requesting node, where the other nodes are used to indicate network nodes which have been registered in the computing node and of which available disk capacities are not less than the storage data volume of the requesting node, and the node information comprises IP addresses of the nodes, available disk capacities of the nodes, and total disk capacities of the nodes; and a resource matching unit, configured to perform resource matching for the data storage request by using a data balanced storage model according to the IP addresses of the nodes, the available disk capacities of the nodes, and total disk capacities of the nodes, generate a matching result and forward the matching result to the requesting node and the other nodes, where the data balanced storage model is used to characterize performing variance operation on the storage data volume of the requesting node and the available disk capacities of the other nodes with the uniform distribution of disk usages of the other nodes as a desired target, and the matching result is used to characterize that the requesting node matches one and only one of the other nodes.

In some embodiments, the matching result in the acquisition unit is obtained by optimization in the data balance storage model, and the matching result is optimized by using the following modules: a generation module, configured to generate a bigraph corresponding to the data storage request and a set of edges in the bigraph according to the data storage request and the node information of the other nodes; and an optimization module, configured to determine whether a set of edges in a current bigraph satisfies an iteration stop condition, and if the iteration stop condition is not satisfied, iteratively optimize an optimal solution in a resource matching problem of a current data storage request based on a heuristic algorithm to obtain an optimized matching result of the resource matching problem of the current data storage request, delete all edges that correspond to the optimal solution in the resource matching problem of the current data storage request in the set of edges, and jump to determine whether a set of edges in a current bigraph satisfies the iteration stop condition, and if the iteration stop condition is satisfied, use the matching result of the resource matching problem of the current data storage request that satisfies the iteration stop condition as the matching result obtained by optimization, where the iteration stop condition is determining whether the set of edges in the bigraph is empty, and the optimal solution is to choose a minimum value of the variance operation in each iteration.

In some embodiments, the heuristic algorithm in the optimization module is constructed based on a genetic algorithm or a tabu search algorithm.

In some embodiments, the apparatus further includes: a registration unit, configured to send registration information to the computing node; and a second storage unit, configured to store the node information in the first blockchain by means of initiating a transaction at intervals of a preset duration.

In some embodiments, both the first blockchain in the acquisition unit and the second blockchain in the first storage unit are public blockchains constructed based on the Bitcoin blockchain technology or the Ethereum blockchain technology.

According to a fourth aspect of this application, an electronic device is provided, including: at least one processor; and a memory connected to the at least one processor by communication, the memory storing instructions executable by the one processor, and the instructions being executed by the at least one processor so that the at least one processor can perform the method described in any implementation of the first aspect.

According to a fifth aspect of this application, this application provides a non-transitory computer-readable storage medium storing computer instructions, the computer instructions being used to cause a computer to perform the method described in any implementation of the first aspect.

According to the technology of this application, data to be stored of a requesting node is acquired in response to receiving a matching result sent by a computing node, the matching result being obtained by performing resource balanced matching for a data storage request based on node information, and the node information being obtained by the computing node from a first blockchain; a transaction is initiated according to the data to be stored of the requesting node, and transaction data corresponding to the data to be stored of the requesting node is generated; the transaction is verified, and a result indicating that the verification is passed and sent by the requesting node is received; and in response to the verification on the transaction is passed and receiving the result indicating that the verification is passed and sent by the requesting node, the transaction data is stored into a second blockchain, the construction of the second blockchain being different from the construction of the first blockchain. Provided is a dual public blockchain security storage solution, which avoids the problem in the prior art that node information stored in a traditional database is leaked and tampered, solves the problems that a large number of accesses are blocked, the nodes cannot provide services normally and the security and stability of a blockchain network are affected due to the imbalanced storage of each node in a blockchain, and improves the security of remote data storage in the blockchain network.

It should be understood that the content described in this section is not intended to identify critical or important features of embodiments of this application, and is not used to limit the scope of this application. Other features of this application will become readily comprehensible through the following description.

BRIEF DESCRIPTION OF THE DRAWINGS

The accompanying drawings are used for better understanding of this solution, and do not constitute a limitation to this application.

FIG. 1 is a schematic diagram of a blockchain-based data storage method according to a first embodiment of this application;

FIG. 2 is a scenario diagram that the blockchain-based data storage method according to embodiments of this application may be implemented therein;

FIG. 3 is a schematic diagram of a blockchain-based data storage method according to a second embodiment of this application;

FIG. 4 is a schematic structural diagram of a blockchain-based data storage system according to an embodiment of this application;

FIG. 5 is a schematic structural diagram of a blockchain-based data storage apparatus according to an embodiment of this application; and

FIG. 6 is a block diagram of an electronic device used to implement the blockchain-based data storage method according to embodiments of this application.

DETAILED DESCRIPTION OF EMBODIMENTS

Example embodiments of this application are described below with reference to the accompanying drawings, which include various details of embodiments of this application to facilitate understanding, and should be considered as exemplary only. Accordingly, those of ordinary skill in the art should recognize that various changes and modifications can be made to embodiments described herein without departing from the scope and spirit of this application. Also, descriptions of well-known functions and constructions are omitted from the following description for clarity and conciseness.

It should be noted that embodiments in this application and the features of embodiments may be combined with each other on a non-conflict basis. This application will be described in detail below with reference to the accompanying drawings and in conjunction with embodiments.

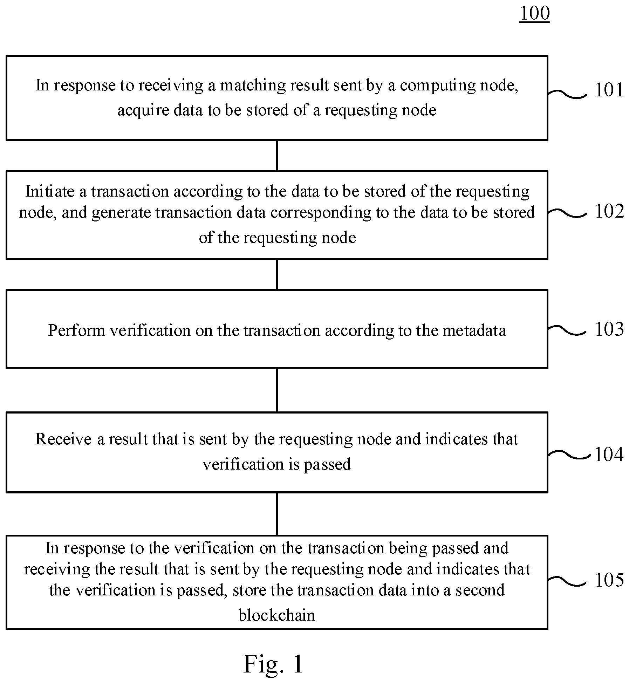

FIG. 1 shows a schematic diagram 100 of a blockchain-based data storage method according to a first embodiment of this application. The blockchain-based data storage method includes the following steps.

Step 101: In response to receiving a matching result sent by a computing node, acquire data to be stored of a requesting node.

In this embodiment, when an executive subject (for example, a node server of a blockchain) receives the matching result sent by the computing node, the executive subject may acquire the data to be stored of the requesting node from other electronic device or locally through wired connection or wireless connection. The computing node may be represented as a node in the blockchain that neither initiates a data storage request nor provides storage services to other nodes, but is only responsible for the computation and management of resource allocation. The matching result may be obtained by performing resource balanced matching for a data storage request of the requesting node based on node information acquired by the computing node from a first blockchain. The requesting node may be represented as a node that needs to borrow storage space from another node in a network, and needs to pay a certain service fee. The executive subject may be represented as a node server that has enough storage space in the network and is willing to provide storage services for other nodes. The information that may be stored in the first blockchain includes: node ID, node IP address, node storage device type, available node disk capacity, total node capacity, etc. The above-mentioned wireless connection may include, but is not limited to, 3G, 4G, 5G connections, WiFi connection, Bluetooth connection, WiMAX connection, Zigbee connection, UWB (ultra wideband) connection, and other wireless connections known now or developed in the future.

Step 102: Initiate a transaction according to the data to be stored of the requesting node, and generate transaction data corresponding to the data to be stored of the requesting node.

In this embodiment, the executive subject may initiate a transaction according to the data to be stored of the requesting node, and generate the transaction data corresponding to the data to be stored of the requesting node. The transaction data may include: metadata corresponding to the data to be stored of the requesting node.

Step 103: Verify the transaction according to the metadata.

In this embodiment, the executive subject may perform encryption verification and signature on the transaction according to the metadata obtained in step 102.

Step 104: Receive a result which indicates that verification is passed and is sent by the requesting node.

In this embodiment, the executive subject may receive the result which is sent by the requesting node and indicates that the verification is passed.

Step 105: In response to the verification on the transaction being passed and receiving the result indicating that the verification is passed and sent by the requesting node, store the transaction data into a second blockchain.

In this embodiment, after the executive subject passes the verification on the transaction and receives the result indicating that the verification is passed and sent by the requesting node, the transaction data is stored into the second blockchain, the second blockchain being different from the first blockchain. The information that may be stored in the second blockchain includes: metadata of a transaction file and transaction details of the transaction file. The metadata of a transaction file particularly includes file name, replication factor, file data volume, storage location, owner of the file, etc.

It should be noted that the above-mentioned transaction and transaction verification are well-known technologies in the currently widely researched and applied blockchain technologies, and will not be repeated here.

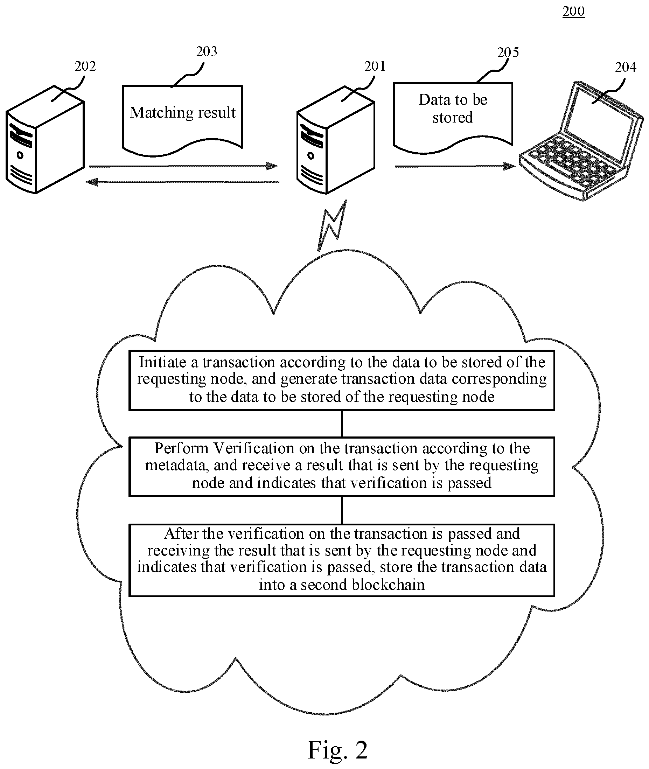

With continued reference to FIG. 2, a blockchain-based data storage method 200 of this embodiment runs in an electronic device 201. After the electronic device 201 receives a matching result 203 sent by a computing node 202, the electronic device 201 first acquires data to be stored 205 of a requesting node 204, and then the electronic device 201 initiates a transaction according to the data to be stored of the requesting node, and generates transaction data corresponding to the data to be stored of the requesting node, the transaction data including metadata corresponding to the data to be stored of the requesting node. Next, the electronic device 201 verifies the transaction according to the metadata and receives a result indicating that the verification is passed and sent by the requesting node. After verifying that the transaction passes and receiving the result indicating that the verification is passed and sent by the requesting node, the electronic device 201 stores the transaction data into a second blockchain.

According to the blockchain-based data storage method provided by the above embodiment of this application, data to be stored of a requesting node is acquired in response to receiving a matching result sent by a computing node, the matching result being obtained by performing resource balanced matching for a data storage request based on node information, and the node information being obtained by the computing node from a first blockchain; a transaction is initiated according to the data to be stored of the requesting node, and transaction data corresponding to the data to be stored of the requesting node is generated; the transaction is verified, and a result indicating that the verification is passed and sent by the requesting node is received; and in response to the verification on the transaction being passed and receiving the result indicating that the verification is passed and sent by the requesting node, the transaction data is stored into a second blockchain, the construction of the second blockchain being different from that the construction of the first blockchain. Provided is a dual public blockchains based security storage solution, which avoids the problem in the prior art that node information stored in a traditional database is leaked and tampered, solves the problems that a large number of accesses are blocked, the nodes cannot provide services normally and the security and stability of a blockchain network are affected due to the imbalanced storage of each node in a blockchain, and improves the security of remote data storage in the blockchain network.

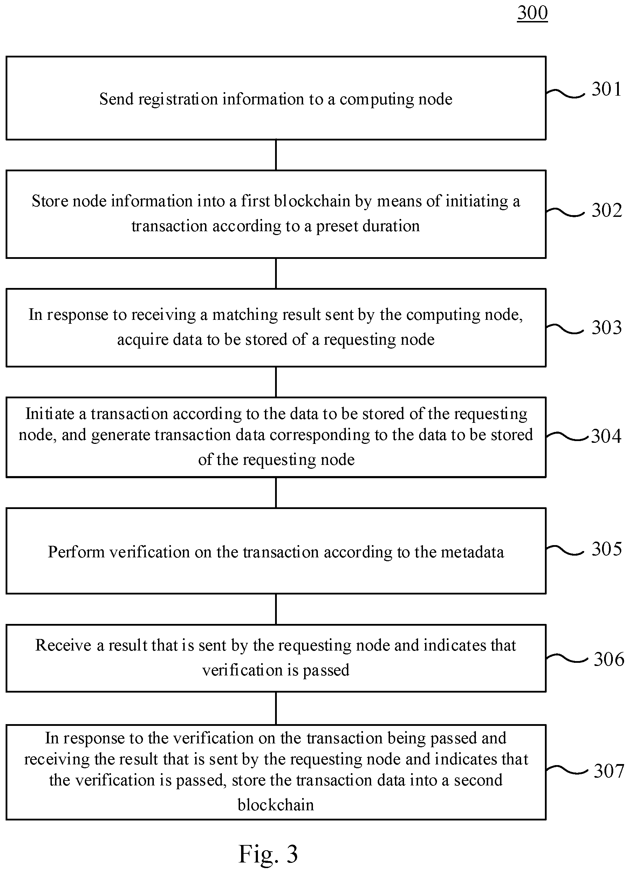

With further reference to FIG. 3, a schematic diagram 300 of a second embodiment of a blockchain-based data storage method is shown. The flow of the method includes the following steps.

Step 301: Send registration information to a computing node.

In this embodiment, the executive subject may send the registration information to a computing node, and servers as a node that provides data storage services to the outside.

Step 302: Store node information in a first blockchain by means of initiating a transaction at intervals of a preset duration.

In this embodiment, the executive subject may store the node information in the first blockchain by means of initiating a transaction at intervals of a preset duration, as the information for providing storage services. The first blockchain may be a public blockchain constructed based on the Bitcoin blockchain technology or the Ethereum blockchain technology.

Step 303: In response to receiving a matching result sent by the computing node, acquire data to be stored of a requesting node.

In this embodiment, after receiving the matching result sent by the computing node, the executive subject acquires the data to be stored of the requesting node.

In this embodiment, the matching result is generated by the computing node, and the process of generating a matching result may include: receiving a data storage request sent by any requesting node, and parsing the data storage request to obtain data to be stored of the requesting node and a storage data volume of the requesting node corresponding to the data to be stored; acquiring node information of other nodes from the first blockchain according to the storage data volume of the requesting node, the other nodes being used to indicate network nodes which have been registered in the computing node and of which available disk capacities are not less than the storage data volume of the requesting node, and the node information including IP addresses of the nodes, available disk capacities of the nodes, and total disk capacities of the nodes; and performing resource matching for the data storage request by using a data balanced storage model according to the IP addresses of the nodes, available disk capacities of the nodes, and total disk capacities of the nodes, generating a matching result and forwarding the matching result to the requesting node and the other nodes, the data balanced storage model being used to characterize performing variance operation on the storage data volume of the requesting node and the available disk capacities of the other nodes with the uniform distribution of disk usages of the other nodes as a desired target, and the matching result is used to characterize that the requesting node matches one and only one of the other nodes.

In some optional implementations of this embodiment, the matching result is obtained by optimization in the data balance storage model, and the optimization process of the matching result includes: generating a bigraph corresponding to the data storage request and a set of edges in the bigraph according to the data storage request and the node information of the other nodes; determining whether a set of edges in a current bigraph satisfies an iteration stop condition, if the iteration stop condition is not satisfied, iteratively optimizing an optimal solution in a resource matching problem of the current data storage request based on a heuristic algorithm to obtain an optimized matching result of the resource matching problem of the current data storage request, deleting all edges that correspond to the optimal solution in the resource matching problem of the current data storage request in the set of edges, and jumping to determine whether a set of edges in a current bigraph satisfies the iteration stop condition; and if the iteration stop condition is satisfied, using the matching result of the resource matching problem of the current data storage request that satisfies the iteration stop condition as the matching result obtained by optimization, the iteration stop condition is: determining whether the set of edges in the bigraph is empty, and the optimal solution being to choose a minimum value of the variance operation in each iteration. Using the way that the weight of an edge in the bigraph represents caused increment on the disk usage of another node, an efficient heuristic matching algorithm is provided, which solves the problem of unbalanced remote distributed data storage and realizes balanced storage of large-scale data in a decentralized network without resource scheduling nodes.

As a further example, the balance problem of remote data storage may be understood as solving a minimum variance (i.e. fitness degree) of allocating m requesting nodes to n service nodes, so that one requesting node can be allocated to exactly one service node (i.e. one-to-one relationship). A weighted bigraph G(UUV, E) is constructed, where U is a set of requesting nodes, V is a set of service nodes, and E is a set of edges in the bigraph. It is assumed that the size of U is m and the size of V is n, $u_i$ represents the $i^{th}$ node of the set U, $i \in \{1,2, \cdots, m\}$, $v_j$ represents the $j^{th}$ node of the set V, $j \in \{1,2, \cdots, n\}$, the edge $e_{ij}$ represents that the requesting node $u_i$ stores data into the service node $v_j$, $e_{ij} \in E$, and $e_{ij} = (u_i, v_j)$. In the solution, G is a complete bigraph. Without loss of generality, it is assumed that m<n, and the storage data volume of data to be stored of $u_i$ is always less than the available disk capacity of $v_j$.

Here the weight $w_{ij}$ of edge $e_{ij}$ is used to represent the increment on the disk usage of $u_i$ due to the allocation of $u_i$ to $v_j$. P = $\{p_j\}$ represents a set of disk usages of nodes in V, where $p_j$ represents the disk usage of $v_j$. X = $\{x_{ij}\}$ represents a final set of matching results, where $x_{ij}$ is represented in binary, $x_{ij}$=1 represents that $u_i$ is allocated to $v_j$, and $x_{ij}$=0 represents other situations.

The formula for calculating the variance value is:

$$F(X) = \frac{\sum_{j=1}^{n}(\sum_{i=1}^{m} w_{ij}x_{ij} + p_j)^2}{n} - \left(\frac{\sum_{j=1}^{n}(\sum_{i=1}^{m} w_{ij}x_{ij} + p_j)}{n}\right)^2$$

The optimization goal is to find X = $\{x_{ij}\}$, so that P = $\{p_j\}$ can be distributed uniformly. The agreed condition includes: ensuring that each requesting node can be allocated to one service node. Because m<n, situations where some requesting nodes finally may not be matched with a the service node may arise, therefore it may need that each requesting node must be allocated to one and only one service node.

In some optional implementations of this embodiment, the heuristic algorithm is constructed based on a genetic algorithm or a tabu search algorithm, to generate an optimal solution in the resource matching problem of the data storage request. The self-defined genetic algorithm and tabu search algorithm are used on the heuristic algorithm, to solve the problem of storage balance and realize a variety of matching algorithms.

Step 304: Initiate a transaction according to the data to be stored of the requesting node, and generate transaction data corresponding to the data to be stored of the requesting node.

Step 305: Verify the transaction according to the metadata.

Step 306: Receive a result indicating that the verification is passed and sent by the requesting node.

Step 307: In response to the verification on the transaction being passed and receiving the result indicating that the verification is passed and sent by the requesting node, store the transaction data into a second blockchain.

In this embodiment, after the executive subject verifies that the transaction passes and receives the result indicating that the verification is passed and sent by the requesting node, the executive subject stores the transaction data into the second blockchain. The second blockchain may be a public blockchain constructed based on the Bitcoin blockchain technology or the Ethereum blockchain technology, and the construction of the second blockchain is different from that of the first blockchain.

In this embodiment, the detailed operations of steps 304, 305 and 306 are substantially the same as the operations of steps 102, 103 and 104 in the embodiment shown in FIG. 1, and details are not repeated here.

It can be seen from FIG. 3 that, compared with the embodiment corresponding to FIG. 1, the schematic diagram 300 of the blockchain-based data storage method in this embodiment provides a dual public blockchain based security storage solution based on a Bitcoin blockchain and an Ethereum blockchain, which can solve the problem of information asymmetry and realize cooperative trust and concerted action among multiple subjects. The dual blockchain structure using the information blockchain/transaction blockchain can be processed separately to simplify the application structure, and different hardware facilities can be used according to the requirements of the blockchains to reduce costs. The two blockchains can perform parallel computations, so that the computations efficiency is greatly improved. Not only can the advantages of the originally defined blockchain be maintained, but also the transaction speed and scalability can be improved, the delay can be reduced, and the profit model can be increased, thereby attracting more users to participate in the blockchain, increasing the scale of a distributed architecture, and further improving the security.

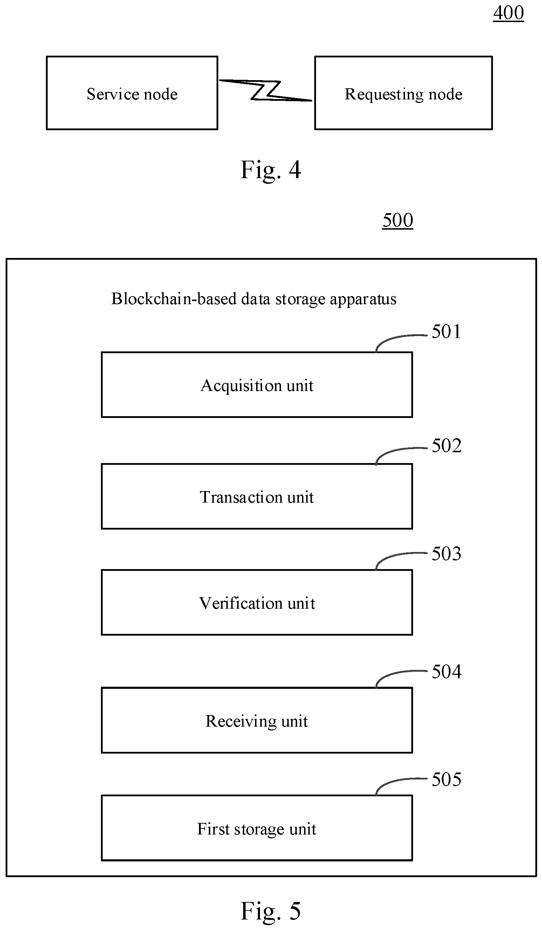

With further reference to FIG. 4, this application provides a blockchain-based data storage system. As shown in FIG. 4, the system includes: a service node 401 and a requesting node 402. The service node is used to perform the above-mentioned blockchain-based data storage method. The requesting node is used to send a data storage request to a computing node; receive a matching result sent by the computing node; verify, by using a consensus mechanism, a transaction based on transaction data generated by the service node; and in response to the verification being passed, send to the service node a result indicating that the verification is passed.

In the system, the requesting node is further used to send a query instruction to a second blockchain to obtain transaction data corresponding to the query instruction.

With further reference to FIG. 5, as an implementation of the methods shown in FIGS. 1 to 3 above, this application provides an embodiment of a blockchain-based data storage apparatus. The embodiment of the apparatus corresponds to the embodiment of the method shown in FIG. 1, and the apparatus may be specifically applied to various electronic devices.

As shown in FIG. 5, the blockchain-based data storage apparatus 500 in this embodiment includes: an acquisition unit 501, a transaction unit 502, a verification unit 503, a receiving unit 504 and a first storage unit 505. The acquisition unit is configured to, in response to receiving a matching result sent by a computing node, acquire data to be stored of a requesting node, where the matching result is obtained by performing resource balanced matching for a data storage request based on node information, and the node information is obtained by the computing node from a first blockchain; the transaction unit is configured to initiate a transaction according to the data to be stored of the requesting node, and generate transaction data corresponding to the data to be stored of the requesting node, where the transaction data comprises metadata corresponding to the data to be stored of the requesting node; the verification unit is configured to perform verification on the transaction according to the metadata; the receiving unit is configured to receive a result indicating that verification is passed and sent by the requesting node; and the first storage unit is configured to, in response to the verification on the transaction being passed and receiving the result indicating that the verification is passed and sent by the requesting node, store the transaction data into a second blockchain, where a construction of the second blockchain is different from a construction of the first blockchain.

In this embodiment, the detailed processing of the acquisition unit 501, the transaction unit 502, the verification unit 503, the receiving unit 504 and the first storage unit 505 of the blockchain-based data storage apparatus 500 and the technical effects brought thereby may be referred to the related descriptions of steps 101 to 105 in the embodiment corresponding to FIG. 1, so details are not repeated here.

In some optional implementations of this embodiment, the matching result in the acquisition unit is generated by the computing node using the following units: a content parsing unit, configured to receive a data storage request sent by any requesting node, and parse the data storage request to obtain data to be stored of the requesting node and a storage data volume of the requesting node corresponding to the data to be stored; a node acquisition unit, configured to acquire node information of other nodes from the first blockchain according to the storage data volume of the requesting node, where the other nodes are used to indicate network nodes which have been registered in the computing node and of which available disk capacities are not less than the storage data volume of the requesting node, and the node information comprises IP addresses of the nodes, available disk capacities of the nodes, and total disk capacities of the nodes; and a resource matching unit, configured to perform resource matching for the data storage request by using a data balanced storage model according to the IP addresses of the nodes, the available disk capacities of the nodes, and total disk capacities of the nodes, generate a matching result and forward the matching result to the requesting node and the other nodes, where the data balanced storage model is used to characterize performing variance operation on the storage data volume of the requesting node and the available disk capacities of the other nodes with the uniform distribution of disk usages of the other nodes as a desired target, and the matching result is used to characterize that the requesting node matches one and only one of the other nodes.

In some optional implementations of this embodiment, the matching result in the acquisition unit is obtained by optimization in the data balance storage model, and the matching result is optimized by using the following modules: a generation module, configured to generate a bigraph corresponding to the data storage request and a set of edges in the bigraph according to the data storage request and the node information of the other nodes; and an optimization module, configured to determine whether a set of edges in a current bigraph satisfies an iteration stop condition, and if the iteration stop condition is not satisfied, iteratively optimize an optimal solution in a resource matching problem of a current data storage request based on a heuristic algorithm to obtain an optimized matching result of the resource matching problem of the current data storage request, delete all edges that correspond to the optimal solution in the resource matching problem of the current data storage request in the set of edges, and jump to determine whether a set of edges in a current bigraph satisfies the iteration stop condition, and if the iteration stop condition is satisfied, use the matching result of the resource matching problem of the current data storage request that satisfies the iteration stop condition as the matching result obtained by optimization, where the iteration stop condition is determining whether the set of edges in the bigraph is empty, and the optimal solution is to choose a minimum value of the variance operation in each iteration.

In some optional implementations of this embodiment, the heuristic algorithm in the optimization module is constructed based on a genetic algorithm or a tabu search algorithm to generate an optimal solution in the resource matching problem of the data storage request.

In some optional implementations of this embodiment, the apparatus further includes: a registration unit, configured to send registration information to the computing node; and a second storage unit, configured to store the node information in the first blockchain by means of initiating a transaction at intervals of a preset duration.

In some optional implementations of this embodiment, the first blockchain in the acquisition unit and the second blockchain in the first storage unit are both public blockchains constructed based on the Bitcoin blockchain technology or the Ethereum blockchain technology, and the construction of the second blockchain is different from the construction of the first blockchain.

According to embodiments of this application, this application further provides an electronic device and a readable storage medium.

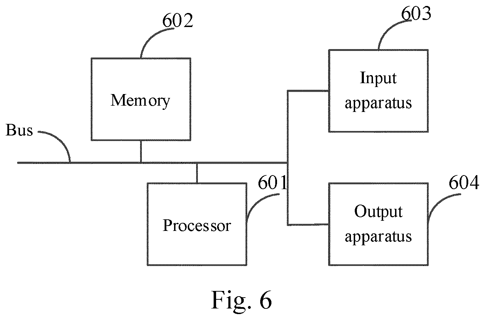

FIG. 6 shows a block diagram of an electronic device used to implement the blockchain-based data storage method according to embodiments of this application. The electronic device is intended to represent various forms of digital computers, such as a laptop, a desktop, a worktable, a personal digital assistant, a server, a blade server, a mainframe computer, and other suitable computers. The electronic device may also represent various forms of mobile devices, such as a personal digital assistant, a cellular phone, a smart phone, a wearable device, and other similar computing devices. For components shown herein, their connections and relationships, and their functions are by way of example only, and are not intended to limit implementations of this application described and/or claimed herein.

As shown in FIG. 6, the electronic device includes: one or more processors 601, a memory 602, and interfaces for connecting various components, including high-speed interfaces and low-speed interfaces. The various components are interconnected by different buses and may be installed on a common motherboard or installed otherwise as required. The processor may process instructions executed within the electronic device, including instructions stored in or on a memory to display graphical information of GUI on an external input/output apparatus (e.g. a display device coupled to the interface). In other embodiments, a plurality of processors and/or a plurality of buses may be used with a plurality of memories and a plurality of memories, if necessary. Likewise, a plurality of electronic devices may be connected, each providing some necessary operations (e.g., as a server array, a group of blade servers, or a multiprocessor system). In FIG. 6, one processor 601 is used as an example.

The memory 602 is a non-transitory computer-readable storage medium provided by this application. The memory stores instructions executable by at least one processor, so that the at least one processor performs the blockchain-based data storage method provided by this application. The non-transitory computer-readable storage medium of this application stores computer instructions, and the computer instructions are used to cause a computer to perform the blockchain-based data storage method provided by this application.

The memory 602, as a non-transitory computer-readable storage medium, may be used to store non-transitory software programs, non-transitory computer-executable programs and modules, such as program instructions/ modules corresponding to the blockchain-based data storage method in embodiments of this application (for example, the acquisition unit 501, the transaction unit 502, the verification unit 503, the receiving unit 504 and the first storage unit 505 shown in FIG. 5). The processor 601 runs the non-transitory software programs, instructions and modules stored in the memory 602 to execute various functional applications and data processing of the server, that is, to implement the blockchain-based data storage method in the above method embodiments.

The memory 602 may include a storage program area and a storage data area. The storage program area may store an operating system, and an application program required for at least one function. The storage data area may store data created according to the use of the blockchain-based data storage electronic device, etc. In addition, the memory 602 may include a high-speed random access memory, and may further include a non-transitory memory, such as at least one magnetic disk storage device, flash memory device, or other non-transitory solid-state storage device. In some embodiments, the memory 602 may optionally include memories arranged remotely from the processor 601, and these remote memories may be connected to the blockchain-based data storage electronic device through a network. Examples of the network include, but are not limited to, the Internet, an intranet, a local area network, a mobile communications network, or a combination thereof.

The electronic device of the blockchain-based data storage method may further include: an input apparatus 603 and an output apparatus 604. The processor 601, the memory 602, the input apparatus 603, and the output apparatus 604 may be connected through a bus or in other methods. In Fig. 6, connection through a bus is used as an example.

The input apparatus 603 may receive input digital or character information, and generate key signal inputs related to user settings and function control of the electronic device of the blockchain-based data storage method, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

According to the technical solution described in embodiments of the present application, a dual public blockchains based security storage solution is provided, which avoids the problem in the prior art that node information stored in a traditional database is leaked and tampered, solves the problems that a large number of accesses are blocked, the nodes cannot provide services normally and the security and stability of a blockchain network are affected due to the imbalanced storage of each node in a blockchain, and improves the security of remote data storage in the blockchain network.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

**Claims**

1. A blockchain-based data storage method, the method comprising:

   in response to receiving a matching result sent by a computing node, acquiring data to be stored of a requesting node, wherein the matching result is obtained by performing resource balanced matching for a data storage request based on node information, and the node information is obtained by the computing node from a first blockchain;

initiating a transaction according to the data to be stored of the requesting node, and generating transaction data corresponding to the data to be stored of the requesting node, wherein the transaction data comprises metadata corresponding to the data to be stored of the requesting node;

performing verification on the transaction according to the metadata;

receiving a result indicating that verification is passed and sent by the requesting node; and

in response to the verification on the transaction being passed and receiving the result indicating that the verification is passed and sent by the requesting node, storing the transaction data into a second blockchain, wherein a construction of the second blockchain is different from a construction of the first blockchain.

2. The method according to claim 1, wherein the matching result is generated by the computing node, and a process of generating a matching result comprises:

receiving a data storage request sent by any requesting node, and parsing the data storage request to obtain data to be stored of the requesting node and a storage data volume of the requesting node corresponding to the data to be stored;

acquiring node information of other nodes from the first blockchain according to the storage data volume of the requesting node, wherein the other nodes are used to indicate network nodes which have been registered in the computing node and of which available disk capacities are not less than the storage data volume of the requesting node, and the node information comprises IP addresses of the nodes, available disk capacities of the nodes, and total disk capacities of the nodes; and

performing resource matching for the data storage request by using a data balanced storage model according to the IP addresses of the nodes, the available disk capacities of the nodes, and the total disk capacities of the nodes, generating a matching result and forwarding the matching result to the requesting node and the other nodes, wherein the data balanced storage model is used to characterize performing variance operation on the storage data volume of the requesting node and the available disk capacities of the other nodes with the uniform distribution of disk usages of the other nodes as a desired target, and the matching result is used to characterize that the requesting node matches one and only one of the other nodes.

3. The method according to claim 2, wherein the matching result is obtained by optimization in the data balance storage model, and the optimization process of the matching result comprises:

generating a bigraph corresponding to the data storage request and a set of edges in the bigraph according to the data storage request and the node information of the other nodes; and

determining whether a set of edges in a current bigraph satisfies an iteration stop condition, if the iteration stop condition is not satisfied, iteratively optimizing an optimal solution in a resource matching problem of a current data storage request based on a heuristic algorithm to obtain an optimized matching result of the resource matching problem of the current data storage request, deleting all edges that correspond to the optimal solution in the resource matching problem of the current data storage request in the set of edges, and jumping to the determining whether a set of edges in a current bigraph satisfies the iteration stop condition; and if the iteration stop condition is satisfied, using the matching result of the resource matching problem of the current data storage request that satisfies the iteration stop condition as the matching result obtained by optimization;

wherein the iteration stop condition is determining whether the set of edges in the bigraph is empty, and the optimal solution is to choose a minimum value of the variance operation in each iteration.

4. The method according to claim 3, wherein the heuristic algorithm is constructed based on a genetic algorithm or a tabu search algorithm.

5. The method according to claim 1, further comprising:

sending registration information to the computing node; and storing the node information into the first blockchain by means of initiating a transaction at intervals of a preset duration.

6. The method according to claim 1, wherein the first blockchain and the second blockchain are both public blockchains constructed based on the Bitcoin blockchain technology or the Ethereum blockchain technology.

7. A blockchain-based data storage system, the system comprising: a service node, wherein the service node is used to perform the blockchain-based data storage method according to any one of claims 1-6.

8. The system according to claim 7, wherein the system further comprises the requesting node; and

the requesting node is used to send the data storage request to the computing node; receive the matching result sent by the computing node; perform verification on the transaction by using a consensus mechanism according to the transaction data generated by the service node; and in response to the verification being passed, send to the service node the result indicating that the verification is passed.

9. The system according to claim 7, wherein the requesting node is further used to send a query instruction to the second blockchain to obtain transaction data corresponding to the query instruction.

10. A blockchain-based data storage apparatus, the apparatus comprising:

an acquisition unit, configured to, in response to receiving a matching result sent by a computing node, acquire data to be stored of a requesting node, wherein the matching result is obtained by performing resource balanced matching for a data storage request based on node information, and the node information is obtained by the computing node from a first blockchain;
a transaction unit, configured to initiate a transaction according to the data to be stored of the requesting node, and generate transaction data corresponding to the data to be stored of the requesting node, wherein the transaction data comprises metadata corresponding to the data to be stored of the requesting node;
a verification unit, configured to perform verification on the transaction according to the metadata;
a receiving unit, configured to receive a result indicating that verification is passed and sent by the requesting node; and
a first storage unit, configured to, in response to the verification on the transaction being passed and receiving the result indicating that the verification is passed and sent by the requesting node, store the transaction data into a second blockchain, wherein a construction of the second blockchain is different from a construction of the first blockchain.

11. The apparatus according to claim 10, wherein the matching result in the acquisition unit is generated by the computing node, and a process of generating a matching result comprises:

a content parsing unit, configured to receive a data storage request sent by any requesting node, and parse the data storage request to obtain data to be stored of the requesting node and a storage data volume of the requesting node corresponding to the data to be stored;
a node acquisition unit, configured to acquire node information of other nodes from the first blockchain according to the storage data volume of the requesting node, wherein the other nodes are used to indicate network nodes which have been registered in the computing node and of which available disk capacities are not less than the storage data volume of the requesting node, and the node information comprises IP addresses of the nodes, available disk capacities of the nodes, and total disk capacities of the nodes; and
a resource matching unit, configured to perform resource matching for the data storage request by using a data balanced storage model according to the IP addresses of the nodes, the available disk capacities of the nodes, and total disk capacities of the nodes, generate a matching result and forward the matching result to the requesting node and the other nodes, wherein the data balanced storage model is used to characterize performing variance operation on the storage data volume of the requesting node and the available disk capacities of the other nodes with the uniform distribution of disk usages of the other nodes as a desired target, and the matching result is used to characterize that the requesting node matches one and only one of the other nodes.

12. The device according to claim 11, wherein the matching result in the acquisition unit is obtained by optimization in the data balance storage model, and the matching result is optimized by using the following modules:

a generation module, configured to generate a bigraph corresponding to the data storage request and a set of edges in the bigraph according to the data storage request and the node information of the other nodes; and
an optimization module, configured to determine whether a set of edges in a current bigraph satisfies an iteration stop condition, and if the iteration stop condition is not satisfied, iteratively optimize an optimal solution in a resource matching problem of a current data storage request based on a heuristic algorithm to obtain an optimized matching result of the resource matching problem of the current data storage request, delete all edges that correspond to the optimal solution in the resource matching problem of the current data storage request in the set of edges, and jump to determine whether a set of edges in a current bigraph satisfies the iteration stop condition, and if the iteration stop condition is satisfied, use the matching result of the resource matching problem of the current data storage request that satisfies the iteration stop condition as the matching result obtained by optimization, wherein the iteration stop condition is determining whether the set of edges in the bigraph is empty, and the optimal solution is to choose a minimum value of the variance operation in each iteration.

13. The apparatus according to claim 10, further comprising:

   a registration unit, configured to send registration information to the computing node; and
   a second storage unit, configured to store the node information in the first blockchain by means of initiating a transaction at intervals of a preset duration.

14. An electronic device, comprising:

   at least one processor; and
   a memory connected to the at least one processor by communication, wherein
   the memory stores instructions executable by the at least one processor, and the instructions are executed by the at least one processor, so that the at least one processor can perform the method according to any one of claims 1-6.

15. A non-transitory computer-readable storage medium storing computer instructions, wherein the computer instructions are used to cause a computer to perform the method according to any one of claims 1-6.

<u>100</u>

In response to receiving a matching result sent by a computing node, acquire data to be stored of a requesting node  ~ 101

Initiate a transaction according to the data to be stored of the requesting node, and generate transaction data corresponding to the data to be stored of the requesting node  ~ 102

Perform verification on the transaction according to the metadata  ~ 103

Receive a result that is sent by the requesting node and indicates that verification is passed  ~ 104

In response to the verification on the transaction being passed and receiving the result that is sent by the requesting node and indicates that the verification is passed, store the transaction data into a second blockchain  ~ 105

Fig. 1

200

202

203

Matching result

201

205

Data to be
stored

204

Initiate a transaction according to the data to be stored of the
requesting node, and generate transaction data corresponding
to the data to be stored of the requesting node

Perform Verification on the transaction according to the
metadata, and receive a result that is sent by the requesting
node and indicates that verification is passed

After the verification on the transaction is passed and
receiving the result that is sent by the requesting node and
indicates that verification is passed, store the transaction data
into a second blockchain

Fig. 2

300

Send registration information to a computing node  〜 301

Store node information into a first blockchain by means of initiating a transaction according to a preset duration  〜 302

In response to receiving a matching result sent by the computing node, acquire data to be stored of a requesting node  〜 303

Initiate a transaction according to the data to be stored of the requesting node, and generate transaction data corresponding to the data to be stored of the requesting node  〜 304

Perform verification on the transaction according to the metadata  〜 305

Receive a result that is sent by the requesting node and indicates that verification is passed  〜 306

In response to the verification on the transaction being passed and receiving the result that is sent by the requesting node and indicates that the verification is passed, store the transaction data into a second blockchain  〜 307

Fig. 3

400

| | | | |
|---|---|---|---|
| Service node | | | Requesting node |

Fig. 4

500

## Blockchain-based data storage apparatus

| Acquisition unit | 501 |
|---|---|

| Transaction unit | 502 |
|---|---|

| Verification unit | 503 |
|---|---|

| Receiving unit | 504 |
|---|---|

| First storage unit | 505 |
|---|---|

Fig. 5

Fig. 6

**EP 4 174 681 A1**

## INTERNATIONAL SEARCH REPORT

| International application No. |
|---|
| **PCT/CN2021/092931** |

**A.    CLASSIFICATION OF SUBJECT MATTER**

H04L 29/08(2006.01)i;  H04L 12/803(2013.01)i;  H04L 9/32(2006.01)i;  G06Q 40/04(2012.01)i;  G06F 16/27(2019.01)i;  G06F 21/62(2013.01)i;  G06F 21/64(2013.01)i;  G06F 21/80(2013.01)i

According to International Patent Classification (IPC) or to both national classification and IPC

**B.    FIELDS SEARCHED**

Minimum documentation searched (classification system followed by classification symbols)

H04L; G06Q; G06F

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 区块链, 数据, 存储, 节点, 匹配, 容量, 负载均衡, 元数据, 交易, 验证, blockchain, data, store, node, match, capacity, load balance, metadata, transaction, verify

**C.    DOCUMENTS CONSIDERED TO BE RELEVANT**

| Category* | Citation of document, with indication, where appropriate, of the relevant passages | Relevant to claim No. |
|---|---|---|
| PX | CN 111866085 A (BEIJING WODONG TIANJUN INFORMATION TECHNOLOGY CO., LTD. et al.) 30 October 2020 (2020-10-30) claims 1-15 | 1-15 |
| A | CN 110263047 A (SHENZHEN QIANHAI WEBANK CO., LTD.) 20 September 2019 (2019-09-20) description, paragraphs [0037]-[0111] | 1-15 |
| A | CN 108696594 A (FOSHAN VIRTUAL REALITY BIG DATA INDUSTRY RESEARCH INSTITUTE CO., LTD.) 23 October 2018 (2018-10-23) entire document | 1-15 |
| A | US 2018359089 A1 (AT & T INTELLECTUAL PROPERTY I, L.P.) 13 December 2018 (2018-12-13) entire document | 1-15 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 July 2021** | **30 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

19

INTERNATIONAL SEARCH REPORT
Information on patent family members

International application No.

**PCT/CN2021/092931**

| Patent document cited in search report | | | Publication date (day/month/year) | Patent family member(s) | | | Publication date (day/month/year) |
|---|---|---|---|---|---|---|---|
| CN | 111866085 | A | 30 October 2020 | None | | | |
| CN | 110263047 | A | 20 September 2019 | WO | 2020259191 | A1 | 30 December 2020 |
| CN | 108696594 | A | 23 October 2018 | None | | | |
| US | 2018359089 | A1 | 13 December 2018 | US | 10341105 | B2 | 02 July 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010595040